# EUROPÄISCHE PATENTSCHRIFT

(11) **EP 3 001 045 B1**
(45) Veröffentlichungstag und Bekanntmachung des Hinweises auf die Patenterteilung: **02.09.2020**
(21) Anmeldenummer: 15185019.5
(22) Anmeldetag: 14.09.2015
(51) Int. Cl.: F16B 25/00

(54) **SELBSTSCHNEIDENDE SCHRAUBE ZUM EINSCHRAUBEN IN EIN BOHRLOCH IN EINEM WERKSTOFF, ANORDNUNG MIT EINER DERARTIGEN SCHRAUBE UND VERFAHREN ZUM EINSCHRAUBEN EINER DERARTIGEN SCHRAUBE IN EIN BOHRLOCH**
SELF-TAPPING SCREW FOR SCREWING INTO A HOLE IN A MATERIAL, ASSEMBLY COMPRISING SUCH A SCREW AND METHOD FOR SCREWING SUCH A SCREW INTO A DRILLED HOLE
VIS AUTO-TARAUDEUSE DESTINEE A VISSER DANS UN ALESAGE DANS UN MATERIAU, SYSTEME DOTE D'UNE TELLE VIS AUTO-TARAUDEUSE ET PROCEDE DE VISSAGE D'UNE TELLE VIS DANS UN ALESAGE

(30) Priorität: 23.09.2014 DE 102014219116; 10.11.2014 DE 102014222891
(43) Veröffentlichungstag der Anmeldung: 30.03.2016
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-A2- 1 887 233
- DE-A1-102005 017 596

## Beschreibung

Die vorliegende Patentanmeldung nimmt die Prioritäten der deutschen Patentanmeldungen DE 10 2014 219 116.5 und DE 10 2014 222 891.3 in Anspruch.

Die Erfindung betrifft eine selbstschneidende Schraube zum Einschrauben in ein Bohrloch in einem Werkstoff, eine Anordnung mit einer derartigen Schraube und ein Verfahren zum Einschrauben einer derartigen Schraube in ein Bohrloch.

Gewindeschneidende Betonschrauben sind bekannt aus EP 1 887 233 A2 und DE 10 2005 017 596 A1.

Schrauben dienen zum Befestigen von Gegenständen beispielsweise an einer Wand oder einer Decke. Es ist bekannt, in ein Bohrloch einen Dübel einzusetzen, in den eine Schraube eingedreht wird.

Der Erfindung liegt die Aufgabe zugrunde, eine Schraube zu schaffen, die ein Einschrauben in ein Bohrloch in einem Werkstoff vereinfacht.

Diese Aufgabe wird durch die Merkmale der Ansprüche 1, 12 und 14 gelöst. Der Kern der Erfindung besteht darin, dass eine selbstschneidende Schraube derart ausgeführt ist, dass sie unmittelbar in ein Bohrloch in einem Werkstoff eingeschraubt werden kann. Zusätzliche Befestigungsmittel, insbesondere ein Dübel, sind entbehrlich. Wesentlich ist, dass die selbstschneidende Schraube ein Schneid-Gewinde zum Einschrauben desselben in den Werkstoff aufweist. Ein Gewinde-Durchmesser des Schneid-Gewindes ist größer als ein Kern-Durchmesser eines zylindrischen Kerns der Schraube und beträgt insbesondere höchstens das 1,4-fache des Kern-Durchmessers. Dadurch ist gewährleistet, dass ein zum Einschrauben der Schraube in ein Bohrloch erforderliches Drehmoment reduziert ist. Insbesondere gegenüber bereits existierenden selbstscheidenden Schrauben, die zum Einschrauben in Beton geeignet sind und von der Patentanmelderin mit der Bezeichnung TSM-Betonschraube vertrieben werden, ist das Eindrehmoment reduziert.

Das reduzierte Drehmoment zum Einschrauben der Schraube ist höchstens so groß, dass es von einem handelsüblichen Akkuschrauber bewältigt werden kann. Die selbstschneidende Schraube ist für den Heim- und Hausbedarf geeignet. Spezialwerkzeuge, insbesondere ein Tangentialschlagschrauber, die zum Einschrauben von Betonschrauben gemäß dem Stand der Technik erforderlich sind, sind entbehrlich. Gleichzeitig gewährleistet die erfindungsgemäße Schraube einen sicheren Halt in dem Werkstoff. Die Belastbarkeit der in den Werkstoff eingeschraubten erfindungsgemäßen Schraube ist mit der einer aus dem Stand der Technik bekannten Betonschraube im Wesentlichen vergleichbar. Mit der erfindungsgemäßen Schraube wird durch das Schneid-Gewinde gegenüber einer aus dem Stand der Technik bekannten Betonschraube weniger Volumen aus der Zylindermantelfläche des Bohrlochs geschnitten. Die erfindungsgemäße Schraube ist zum Einschrauben in ein Bohrloch in Beton geeignet. Die Schraube eignet sich auch zum Einschrauben in Bohrlöcher in anderen harten Materialien wie beispielsweise Vollziegel.

Die Schraube mit einer Gewindesteigung, die höchstens das 1,2-fache des Kern-Durchmessers beträgt, gewährleistet, dass trotz des gegenüber einer aus dem Stand der Technik bekannten Beton-Schraube reduzierten Gewinde-Durchmessers eine ausreichende Haltekraft ermöglicht ist. Das Schneid-Gewinde ist enger. Daraus resultiert ein verbesserter SelbsthemmungsEffekt. Darüber hinaus ist ein Gewindeanteil pro Einschraubtiefe gegenüber einer aus dem Stand der Technik bekannten Betonschraube erhöht. Insbesondere beträgt die Gewindesteigung höchstens das 1,15-fache, insbesondere das 1,12-fache, insbesondere höchstens das 1,1-fache, höchstens das 1,0-fache, insbesondere höchstens das 0,9-fache, insbesondere höchstens das 0,85-fache und insbesondere das 0,8-fache des Kern-Durchmessers.

Die Schraube mit einer Einschraubtiefe, die höchstens 30 mm beträgt, gewährleistet, dass eine Kollision der Schraube mit einer Armierungsschicht in dem Werkstoff ausgeschlossen ist. Eine Armierungsschicht die typischerweise in einem Beton-Bauteil zur Stabilisierung desselben vorgesehen ist, ist üblicherweise mit etwa 30 mm Abstand zur Betonoberfläche in dem Beton-Bauteil angeordnet. Insbesondere beträgt die Einschraubtiefe höchstens 29 mm, insbesondere höchstens 28 mm, insbesondere höchstens 27 mm, insbesondere höchstens 26 mm und insbesondere höchstens 25 mm. Erfindungsgemäß wurde zudem gefunden, dass unabhängig von einer möglichen Armierungsschicht das zum Einschrauben erforderliche Drehmoment bei Einhaltung der genannten maximalen Einschraubtiefe signifikant und insbesondere überproportional reduziert ist. Bei Überschreiten der maximalen Einschraubtiefe steigt das benötigte Drehmoment überproportional an, sodass zum Aufbringen des Einschraubdrehmoments Spezialwerkzeug erforderlich wird. Dies kann durch Begrenzen der Einschraubtiefe vermieden werden.

Eine Schraube, bei der der Gewinde-Durchmesser kleiner oder gleich ist als das 1,4-fache, insbesondere kleiner ist als das 1,38-fache, insbesondere kleiner ist als das 1,35-fache, insbesondere kleiner ist als das 1,32-fache, insbesondere kleiner ist als das 1,3-fache, insbesondere kleiner ist als das 1,28-fache und insbesondere kleiner ist als das 1,275-fache des Kern-Durchmessers, ermöglicht ein zusätzlich erleichtertes Einschrauben. Das zum Einschrauben erforderliche Drehmoment ist weiter reduziert.

Eine Schraube mit einem Anschneid-Element des Schneid-Gewindes vereinfacht das Einschrauben, insbesondere den Beginn des Einschraubvorgangs. Das Anschneid-Element ist insbesondere im Bereich eines Einführendes der Schraube angeordnet. Insbesondere ist das Anschneid-Element mit einem gegenüber dem Gewinde-Durchmesser des Schneid-Gewindes reduzierten Anschneid-Gewinde-Durchmesser ausgeführt. Der Anschneid-Gewinde-Durchmesser steigt entlang des Umfangs der Schraubenlinie des Schneid-Gewindes bis zum Gewinde-Durchmesser an. Der Anstieg kann linear erfolgen. Der Anstieg kann sich entlang eines Öffnungswinkels bezogen auf eine Drehung um die Mittel-Längs-Achse der Schraube von 360° erstrecken, also eine vollständige Umdrehung, die einem Gewindegang entspricht. Der Anstieg des reduzierten Anschneid-Gewinde-Durchmessers auf den Gewinde-Durchmesser kann beispielsweise auch innerhalb einer halben Umdrehung, also in einem Öffnungswinkel von 180°, oder einer Dreiviertel-Umdrehung, also einem Öffnungswinkel von 270°, erfolgen. Der Anstieg des Anschneid-Gewinde-Durchmessers kann auch nicht-linear sein. Das Anschneid-Element ist unkompliziert ausgeführt. Insbesondere ist eine Verzahnung als Anschneid-Element entbehrlich.

Eine Schraube mit einem Flankenwinkel des Schneid-Gewindes, der insbesondere kleiner ist als 60°, ermöglicht ein vereinfachtes Eindrehen, also ein Eindrehen der Schraube in das Bohrloch mit reduziertem Drehmoment, da die vergleichsweise spitzen Gewindeflanken eine reduzierte Widerstandskraft beim Eindrehen bewirken. Der Werkstoff, insbesondere der Beton, wird durch die spitzen Flanken weniger geschnitten. Insbesondere beträgt der Flankenwinkel weniger als 58°, insbesondere weniger als 55°, insbesondere weniger als 52° und insbesondere höchstens 50°.

Die Schraube mit einer Flankenbreite im Gewindegrund des Schneid-Gewindes, die kleiner ist als das 0,2-fache des Kern-Durchmessers, ermöglicht ein erleichtertes Einschneiden des Schneid-Gewindes in die Bohrlochwand. Insbesondere beträgt die Flankenbreite weniger als das 0,18-fache, insbesondere weniger als das 0,15-fache, insbesondere weniger als das 0,12-fache und insbesondere höchstens das 0,1-fache des Kern-Durchmessers.

Eine Schraube mit einem gewindefreien Schaftabschnitt ermöglicht ein vereinfachtes Anordnen eines Gegenstands an der Schraube. Der gewindefreie Schaftabschnitt ist insbesondere gegenüberliegend zu dem Einführende, insbesondere unmittelbar anschließend, an das Schneid-Gewinde ausgeführt.

Eine Schraube mit einer Befestigungs-Einheit ermöglicht das Befestigen eines Gegenstandes an der Schraube. Die Befestigungs-Einheit kann insbesondere einen einteilig angeformten Schraubenkopf, insbesondere einen Senkkopf oder einen Flachkopf, aufweisen. Die Befestigungs-Einheit kann alternativ auch ein Befestigungs-Gewinde, insbesondere ein metrisches Gewinde, insbesondere ein metrisches Außen-Gewinde, mit einem korrespondierenden Befestigungs-Element, insbesondere eine Befestigungs-Mutter, aufweisen. Die Schraube eignet sich besonders als Befestigungsmittel für den Hausbedarf. Die Schraube kann beispielsweise unmittelbar in eine Beton-Decke, eine Beton-Wand oder einen Beton-Boden zur Befestigung eines Gegenstands geschraubt werden. Ein Dübel ist entbehrlich.

Eine Schraube mit einem Werkzeugabschnitt, der eine senkrecht zur Mittel-Längs-Achse der Schraube orientierte Querschnittsfläche aufweist, die eine bezogen auf die Mittel-Längs-Achse unrunde Kontur hat, ermöglicht das Eindrehen der Schraube mittels eines Werkzeugs. Die unrunde Kontur ist insbesondere eine unrunde Innenkontur oder einen unrunde Außenkontur. Eine unrunde Kontur kann beispielsweise polygonförmig sein und beispielsweise eine Dreikant-, Vierkant-, Sechskant- oder Achtkant-Kontur haben. Möglich ist auch eine Vielrund-Kontur, insbesondere eine Sechsrund-Kontur.

Eine Schraube, bei der ein Drehmoment zum Einschrauben der Schraube in das Bohrloch höchstens 14 Nm beträgt, kann mittels eines handelsüblichen Akku-Bohrschraubers in das Bohrloch eingeschraubt werden. Spezialwerkzeuge, insbesondere ein Tangentialschlagschrauber, sind entbehrlich. Die Schraube ist für den Hausgebrauch geeignet. Insbesondere beträgt das Drehmoment höchstens 12 Nm, insbesondere höchstens 10 Nm, insbesondere höchstens 9 Nm, insbesondere höchstens 8 Nm, insbesondere höchstens 7,5 Nm, insbesondere höchstens 7 Nm, insbesondere höchstens 6,5 Nm und insbesondere höchstens 6 Nm.

Eine Anordnung mit einem in einem Werkstoff angeordneten Bohrloch ermöglicht ein vereinfachtes Eindrehen einer selbstschneidenden Schraube. Der Gewinde-Durchmesser ist größer als ein Bohrloch-Nenndurchmesser des Bohrlochs und insbesondere kleiner als das 1,25-fache des Bohrloch-Nenndurchmessers. Insbesondere ist der Gewinde-Durchmesser kleiner als das 1,22-fache, insbesondere kleiner als das 1,2-fache und insbesondere kleiner als das 1,17-fache des Bohrloch-Nenndurchmessers.

Eine Anordnung mit einer Bohrloch-Tiefe des Bohrlochs, die derart festgelegt ist, dass das Bohrloch vor einer in dem Werkstoff eingebeteten Armierungsschicht endet, gewährleistet ein kollisionsfreies Einschrauben der Schraube. Das resultierende Drehmoment ist dadurch reduziert. Die Armierungsschicht ist insbesondere der Oberfläche des Werkstoffs, insbesondere Beton, zugewandt. Insbesondere ist die Bohrloch-Tiefe kleiner als 30 mm. Das Bohrloch ist insbesondere ein Sackloch.

Ein Verfahren zum Einschrauben einer selbstschneidenden Schraube in ein Bohrloch in einem Werkstoff weist die Vorteile auf, die anhand der Schraube bereits erläutert wurden und worauf hiermit verwiesen wird. Das Verfahren ist insbesondere geeignet, um eine selbstschneidende Schraube in ein Bohrloch in Beton einzuschrauben.

Ein Verfahren, bei dem das zum Einschrauben erforderliche Drehmoment höchstens 14 Nm beträgt, ermöglicht die Verwendung eines Akku-Bohrschraubers. Insbesondere beträgt das Drehmoment höchstens 12 Nm, insbesondere höchstens 10 Nm, insbesondere höchstens 9 Nm, insbesondere höchstens 8 Nm, insbesondere höchstens 7,5 Nm, insbesondere höchstens 7 Nm, insbesondere höchstens 6,5 Nm und insbesondere höchstens 6 Nm.

Weitere vorteilhafte Ausgestaltungen, zusätzliche Merkmale und Einzelheiten der Erfindung ergeben sich aus der nachfolgenden Beschreibung von drei Ausführungsbeispielen anhand der Zeichnung. Es zeigen:
- Fig. 1: eine Schnittdarstellung einer Anordnung mit einer erfindungsgemäßen Schraube gemäß einem ersten Ausführungsbeispiel in einem Bohrloch,
- Fig. 2: eine Draufsicht auf die Schraube gemäß Fig. 1,
- Fig. 3: eine Seitenansicht einer Schraube gemäß einem zweiten Ausführungsbeispiel,
- Fig. 4: eine Draufsicht der Schraube gemäß Fig. 3,
- Fig. 5: eine Fig. 3 entsprechende Darstellung einer Schraube gemäß einem dritten Ausführungsbeispiel, und
- Fig. 6: eine Fig. 5 entsprechende teilgeschnittene Darstellung einer Schraube gemäß einem vierten Ausführungsbeispiel.

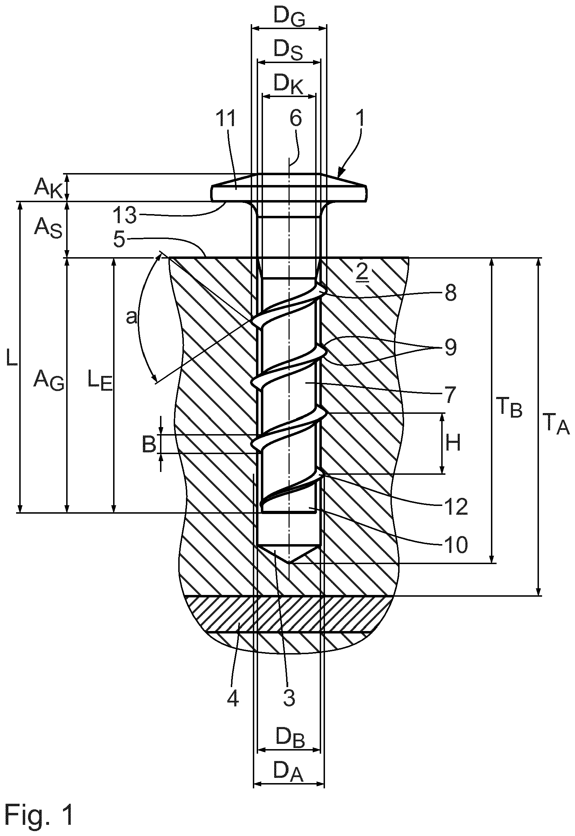

Bei einer in Fig. 1 gezeigten Anordnung ist eine selbstschneidende Schraube 1 in ein Bohrloch 3 in einem Werkstoff 2 eingeschraubt. Gemäß dem gezeigten Ausführungsbeispiel ist der Werkstoff 2 Beton. Die Schraube 1 ist eine Beton-Schraube. Die Schraube 1 ist aus dem Werkstoff 20MnB4 hergestellt. Dieser Werkstoff hat die Werkstoffnummer 1.5525. Vorteilhaft ist es, wenn die Schraube 1 aus einem borlegierten Stahl hergestellt ist. Grundsätzlich eignen sich auch borlegierte Stahlwerkstoffe mit leicht veränderten chemischen Zusammensetzungen, wobei der Kohlenstoffgehalt mit 0,15 bis 0,20 Gew.-% bei 17MnB4 (Werkstoffnummer 1.5520) geringer und mit 0,20 bis 0,25 Gew.-% bei 23MnB4 (Werkstoffnummer 1.5535) größer sein kann als bei 20MnB4, bei dem der Kohlenstoffgehalt 0,18 bis 0,23 Gew.-% beträgt. Weitere borlegierte Stähle, aus welchen die Schraube 1 hergestellt sein könnte, sind die Werkstoffe mit den Werkstoffnummern 1.5502 (17B2), 1.5508 (23B2), 1.5510 (28B2), 1.5514 (33B2), 1.5515 (38B2), 1.5536 (27MnB4), 1.5526 (30MnB4), 1.5537 (36MnB4), 1.5538 (37MnB4), 1.5408 (30MoB1), 1.7076 (32CrB4), 1.7077 (36CrB4) und 1.7272(31CrMoB2-1).

Das Bohrloch 3 ist als Sackloch ausgeführt. Das Bohrloch 3 weist eine Bohrloch-Tiefe T_{B} auf. Die Bohrloch-Tiefe T_{B} beträgt gemäß dem gezeigten Ausführungsbeispiel 27 mm. Die Bohrloch-Tiefe T_{B} ist kleiner als eine Armierungs-Tiefe T_{A}. Als Armierungs-Tiefe T_{A} wird der Abstand einer Armierungsschicht 4 von einer Oberfläche 5 des Werkstoffs 2 bezeichnet. Die Armierungsschicht 4 dient zum Armieren des Werkstoffs 2. In Beton ist die Armierungsschicht 4 als Stahl-Bewehrung, insbesondere in Form von Stahl-Stangen, insbesondere in Form von profilierten Stahl-Stangen, also mit beispielsweise einem Außen-Grobgewinde ausgeführt. Wenn die Bohrloch-Tiefe T_{B} kleiner ist als die Armierungs-Tiefe T_{A}, ist gewährleistet, dass die Schraube 1 nicht mit der Armierungsschicht 4 kollidiert. Das Bohrloch 3 weist ferner einen Bohrloch-Nenndurchmesser D_{B} auf. Gemäß dem gezeigten Ausführungsbeispiel gilt: D_{B} = 6 mm.

Die Schraube 1 weist eine Mittel-Längs-Achse 6 auf. Die Schraube 1 weist einen zylindrischen Kern 7 mit einem Kern-Durchmesser D_{K} und ein Schneid-Gewinde 8 mit einem Gewinde-Durchmesser D_{G} auf. Gemäß dem gezeigten Ausführungsbeispiel gilt: D_{K} = 5,5 mm und D_{G} = 7 mm. Insbesondere gilt: D_{G} ≈ 1,27 · D_{K}. Vorteilhaft ist, wenn der Gewinde-Durchmesser höchstens das 1,4-fache des Kern-Durchmessers aufweist.

Ferner gilt: D_{G} ≈ 1,167 · D_{B}. Insbesondere gilt, dass der Gewinde-Durchmesser kleiner ist als das 1,25-fache des Bohrloch-Nenndurchmessers D_{B}.

Das Schneid-Gewinde 8 weist eine Gewindesteigung H auf. Gemäß dem gezeigten Ausführungsbeispiel gilt: H = 4,4 mm. Gemäß dem gezeigten Ausführungsbeispiel gilt: H = 0,8 · D_{K}. Vorteilhaft ist, wenn die Gewindesteigung H höchstens das 1,2-fache des Kern-Durchmessers D_{K} beträgt.

Das Schneid-Gewinde 8 weist Gewinde-Flanken 9 auf, die eine Flankenbreite B im Gewindegrund, also am Kern 7, festlegen. Gemäß dem gezeigten Ausführungsbeispiel beträgt die Flankenbreite 0,7 mm. Vorteilhaft ist, wenn die Flankenbreite B kleiner ist als das 0,2-fache des Kern-Durchmessers D_{K}. Gemäß dem gezeigten Ausführungsbeispiel gilt: B = 0,1 · D_{K}.

Die Gewinde-Flanken 9 schließen einen Flankenwinkel a ein. Der Flankenwinkel a des Schneid-Gewindes 8 beträgt gemäß dem gezeigten Ausführungsbeispiel 50°. Vorteilhaft ist, wenn der Flankenwinkel a kleiner ist als 60°.

Die Schraube 1 weist eine Länge L auf. Die Länge L erstreckt sich von einem freien Ende der Schraube 1 bis zu einem Schraubenkopf 11, der als Flachkopf ausgeführt ist. Gemäß dem gezeigten Ausführungsbeispiel beträgt die Länge L 30 mm. Das dem Schraubenkopf 11 gegenüberliegend angeordnete freie Ende ist ein Einführende 10, mit dem die Schraube 1 in das Bohrloch 3 eingeführt wird. Die Schraube 1 ist mit einer Einschraublänge L_{E} in das Bohrloch 3 eingeschraubt. Die Einschraublänge L_{E} ist kleiner als die Länge L. Gemäß dem gezeigten Ausführungsbeispiel gilt: L_{E} = 25 mm. Wesentlich ist, dass die Einschraublänge L_{E} höchstens 30 mm beträgt und insbesondere höchstens der Armierungs-Tiefe T_{A} entspricht. Damit ist gewährleistet, dass auch dann, wenn das Bohrloch 3 eine Bohrloch-Tiefe T_{B} aufweist, die größer ist als die Armierungs-Tiefe T_{A}, wenn also das Bohrloch 3 in die Armierungsschicht 4 eindringt, ein unbeabsichtigtes Einschrauben der Schraube 1 in die Armierungsschicht 4 zuverlässig verhindert ist.

An dem Einführende 10 ist an einem Gewindeanfang des Schneid-Gewindes 8 ein Anschneid-Element 12 vorgesehen. Das Anschneid-Element 12 weist einen Anschneid-Gewinde-Durchmesser D_{A} auf, der gegenüber dem Gewinde-Durchmesser D_{G} reduziert ist. Am Gewindeanfang ist der reduzierte Gewinde-Durchmesser kleiner als der Bohrloch-Nenndurchmesser D_{B}. Entlang der Gewinde-Schraubenlinie steigt der Gewinde-Durchmesser, insbesondere linear, an. Der Anschneid-Gewinde-Durchmesser D_{A} ist größer als der Bohrloch-Nenndurchmesser D_{B}. Insbesondere gilt D_{A} ≥ 1,001 · D_{B}, insbesondere D_{A} ≥ 1,003 · D_{B} und insbesondere D_{A} ≥ 1,005 · D_{B}. Der Anschneid-Gewinde-Durchmesser D_{A} ist kleiner als der Gewinde-Durchmesser D_{G}. Insbesondere gilt: D_{A} ≤ 0,99 · D_{G}, insbesondere D_{A} ≤ 0,97 · D_{G} und insbesondere D_{A} ≤ 0,95 · D_{G}.

Das Anschneid-Element 12 ist besonders unkompliziert ausgeführt. Die Schraube 1 ist unkompliziert und somit kostengünstig herstellbar. Das Herstellen einer Verzahnung am Schneid-Gewinde als Anschneid-Element ist entbehrlich.

Das Schneid-Gewinde 8 erstreckt sich entlang des Kerns 7 in einem Gewinde-Abschnitt A_{G} der Schraube 1. Der Gewinde-Abschnitt A_{G} erstreckt sich entlang der Einschraublänge L_{E}. Dem Gewinde-Abschnitt A_{G} schließt sich entlang der Mittel-Längs-Achse 6 ein gewindefreier Schaftabschnitt A_{S} an. Der Schaftabschnitt A_{S} weist einen Schaft-Durchmesser D_{S} auf, der gegenüber dem Kern-Durchmesser D_{K} vergrößert ist. Insbesondere gilt: D_{S} ≥ 1,05 · D_{K}. Insbesondere entspricht der Schaft-Durchmesser D_{S} im Wesentlichen dem Bohrloch-Nenndurchmesser D_{B}. Insbesondere gilt: D_{S} > D_{B}, insbesondere D_{S} > 1,005 · D_{B}. Dadurch ist gewährleistet, dass die Schraube 1 maximal mit dem Gewinde-Abschnitt A_{G} in das Bohrloch 3 eingeschraubt wird. Ein unbeabsichtigtes Eindrehen der Schraube 1 mit dem Schaftabschnitt A_{S} ist zuverlässig verhindert. Der Schaftabschnitt A_{S} steht an der freien Oberfläche 5 des Werkstoffs 2 über. An dem freien Schaftabschnitt A_{S} kann ein Gegenstand gehalten werden.

Der Übergang von dem Kern-Durchmesser D_{K} auf den Schaft-Durchmesser D_{S} erfolgt linear, also entlang eines kegelstumpfförmigen Zwischenabschnitts. Der kegelstumpfförmige Zwischenabschnitt ist Bestandteil des Gewinde-Abschnitts A_{G}. Der Zwischenabschnitt ist benachbart zu dem Schaftabschnitt A_{S} an dem Gewinde-Abschnitt A_{G} angeordnet. Der Zwischenabschnitt bildet den Übergang von dem Gewindeabschnitt A_{G} auf den Schaftabschnitt A_{S}.

An den Schaftabschnitt A_{S} schließt sich entlang der Mittel-Längs-Achse 6 ein Kopf-Abschnitt A_{K} an. Der Kopf-Abschnitt A_{K} umfasst den Schraubenkopf 11. Der Schraubenkopf 11 weist einen Schraubenkopf-Durchmesser D_{SK} auf, der gemäß dem gezeigten Ausführungsbeispiel 15 mm beträgt. Insbesondere gilt D_{SK} ≥ 2 · D_{K}, insbesondere mindestens D_{SK} ≥ 2,2 · D_{K}, insbesondere D_{SK} ≥ 2,5 · D_{K} und insbesondere D_{SK} ≥ 2,7 · D_{K}. Gemäß dem gezeigten Ausführungsbeispiel gilt: D_{SK} ≈ 2,73 · D_{K}. Der Schraubenkopf 11 bildet eine Befestigungs-Einheit zum Befestigen eines Gegenstands an der Schraube 1. Beispielsweise kann zwischen einer Unterseite 13 des Schraubenkopfs 11 und der Oberfläche 5 des Werkstoffs 2 ein am Schaftabschnitt A_{S} gehaltener Gegenstand geklemmt werden.

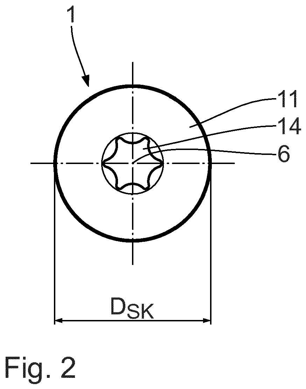

Gemäß dem gezeigten Ausführungsbeispiel weist der Kopf-Abschnitt A_{K} einen Werkzeugabschnitt 14 auf. Gemäß dem gezeigten Ausführungsbeispiel in Fig. 2 ist der Werkzeugabschnitt 14 als Innenkontur in dem Schraubenkopf 11 ausgeführt. Die Innenkontur ist unrund bezüglich der Mittel-Längs-Achse 6. Die unrunde Innenkontur ist als Innen-Sechsrund ausgeführt. Die Schraube 1 ist von oben mittels eines Werkzeugs schraubbar.

Die Schraube 1 und das in dem Werkstoff 2 angeordnete Bohrloch 3 bilden eine Anordnung.

Nachfolgend wird ein Verfahren zum Einschrauben der Schraube 1 in das Bohrloch 3 des Werkstoffs 2 näher erläutert. Zunächst wird in den Werkstoff 2 das Bohrloch 3 bis zu der Bohrloch-Tiefe T_{B} gebohrt. Die Schraube 1 wird mit dem Einführende 10 in das Bohrloch 3 eingeführt und eingedreht, wobei das Anschneid-Element 12 in die Zylindermantelfläche des Bohrlochs 3 ein Gewinde einschneidet. Mit zunehmendem Eindrehen der Schraube 1 in das Bohrloch 3 wird die Schraube 1 entlang der Mittel-Längs-Achse 6 in das Bohrloch 3 verlagert. Die Einschraublänge L_{E} steigt. Die dabei erzeugte Schraubbewegung bewirkt das Einschneiden einer Gewinde-Schraubenlinie am Bohrloch 3. Die Schraube 1 wird bis maximal zur Einschraublänge L_{E} in das Bohrloch 3 eingeschraubt. Aufgrund des kleinen und spitzen Schraub-Gewindes 8 ist das zum Einschrauben erforderliche Drehmoment reduziert und insbesondere kleiner als bei einer aus dem Stand der Technik bekannten Beton-Schraube. Das erforderliche Drehmoment beträgt höchstens 14 Nm. Die Schraube 1 kann mittels eines handelsüblichen Akkuschraubers eingeschraubt werden.

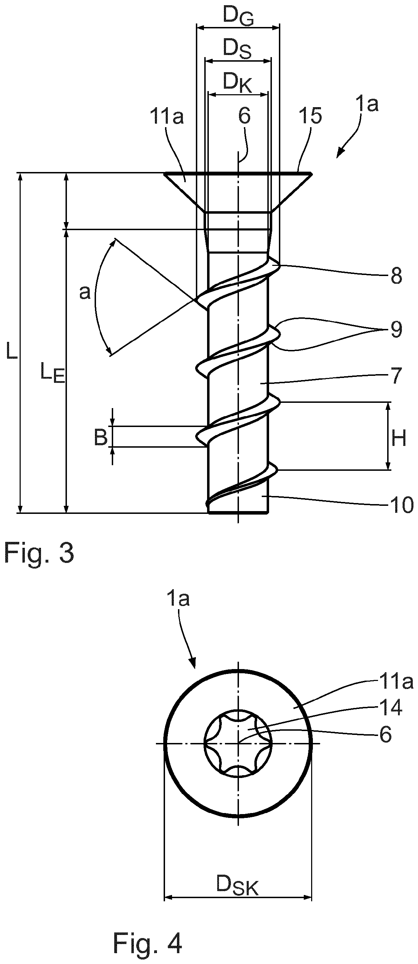

Im Folgenden wird unter Bezugnahme auf die Fig. 3 und 4 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied der Schraube 1a gemäß dem zweiten Ausführungsbeispiel ist die Ausführung des Schraubenkopfes 11a als Senkkopf. Der maximale Schraubenkopf-Durchmesser D_{SK} beträgt gemäß dem gezeigten Ausführungsbeispiel 13 mm. Der Schraubenkopf 11a ist kegelstumpfförmig ausgeführt. Das bedeutet, dass der Schraubenkopf-Durchmesser D_{SK} entlang der Mittel-Längs-Achse veränderlich ist. Der maximale Schraubenkopf-Durchmesser D_{SK} ist an einem freien Ende des Schraubenkopfes 11a, also an einem freien Ende 15 der Schraube 1 angeordnet. Das freie Ende 15 ist dem Einführende 10 gegenüberliegend angeordnet.

Bei entsprechender Vorbereitung eines Bohrlochs, in das die Schraube 1a eingeschraubt werden soll, kann die Schraube 1a bündig mit der Oberfläche des Werkstoffs oder in dem Bohrloch 3 versenkt angeordnet sein, sodass die Schraube 1a an der Oberfläche 5 des Werkstoffs 2 nicht übersteht. Der gewindefreie Schaftabschnitt A_{S} ist gegenüber dem ersten Ausführungsbeispiel verkürzt. Der Kopf-Abschnitt mit dem kegelstumpfförmigen Senkkopf ist in den Schaftabschnitt A_{S} integriert. Die Geometrie des Kerns 7 und insbesondere des Schneid-Gewindes 8 ist bei der Schraube 1a identisch im ersten Ausführungsbeispiel.

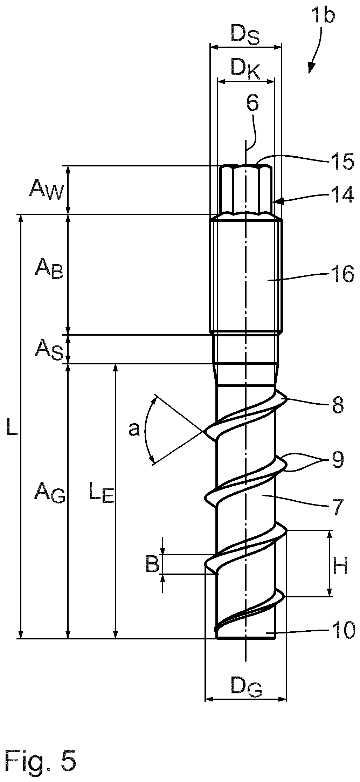

Im Folgenden wird unter Bezugnahme auf Fig. 5 ein drittes Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Wesentlicher Unterschied gegenüber den beiden ersten Ausführungsbeispielen ist, dass ein Schraubenkopf nicht vorgesehen ist. An den gewindelosen Schaftabschnitt A_{S} schließt sich ein Befestigungs-Abschnitt A_{B} an. Innerhalb des Befestigungs-Abschnitts A_{B} ist die Befestigungs-Einheit zum Befestigen eines Gegenstands an der Schraube 1b vorgesehen. Bei der Schraube 1b weist die Befestigungs-Einheit ein als metrisches Außengewinde ausgeführtes Befestigungs-Gewinde 16 und ein dazu korrespondierendes, nicht dargestelltes Befestigungs-Element auf. Als Befestigungs-Element dient insbesondere eine metrische Befestigungs-Mutter. Gemäß dem gezeigten Ausführungsbeispiel ist das Befestigungs-Gewinde ein M6-Außengewinde.

Im Gegensatz zu den beiden vorstehenden Ausführungsbeispielen, bei welchen der Werkzeugabschnitt jeweils in den Kopf-Abschnitt der Schrauben integriert war, ist der Werkzeugabschnitt A_{W} bei der Schraube 1b entlang der Mittel-Längs-Achse 6 an dem Befestigungs-Abschnitt A_{B} anschließend angeordnet. Der Werkzeugabschnitt A_{W} endet an dem oberen, freien Ende 15 der Schraube 1b. Der Werkzeugabschnitt A_{W} weist eine unrunde Außenkontur auf, die als Außen-Sechskant mit einer Schlüsselweite von 4 mm ausgeführt ist.

Ein weiteres, nicht dargestelltes Ausführungsbeispiel einer Schraube weist einen Sechskant-Schraubenkopf auf. Die Gestaltung des Schraubenkopfes und insbesondere das Vorsehen eines Schraubenkopfes sind für die Funktionalität der selbstschneidenden Schraube gemäß der vorliegenden Erfindung unerheblich.

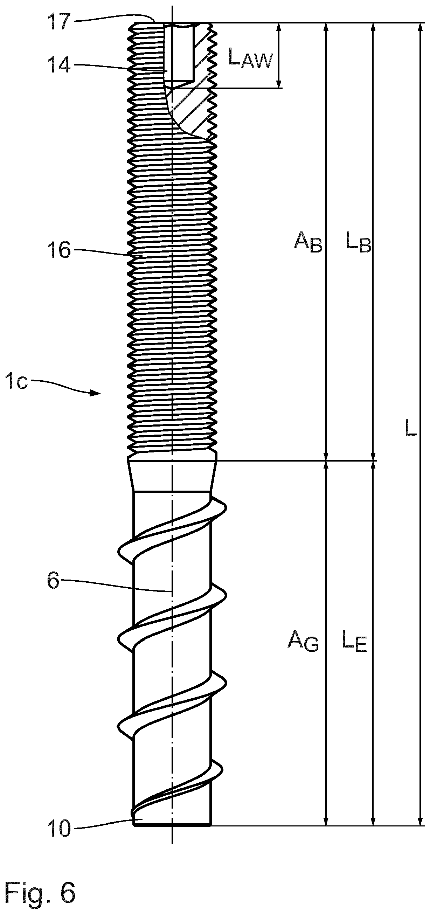

Im Folgenden wird unter Bezugnahme auf die Fig. 6 ein viertes Ausführungsbeispiel der Erfindung beschrieben. Konstruktiv identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c.

Der wesentliche Unterschied der Schraube 1c gegenüber dem dritten Ausführungsbeispiel besteht darin, dass der Werkzeugabschnitt 14 sich entlang der Mittel-Längs-Achse 6 nicht an den Befestigungs-Abschnitt A_{B} verlängernd anschließt, sondern innenliegend angeordnet ist. Der Werkzeugabschnitt 14 ist innerhalb des Befestigungs-Abschnitts A_{B} angeordnet. Der Werkzeugabschnitt ist ein Teilabschnitt des Befestigungs-Abschnitts A_{B}. Der Werkzeugabschnitt 14 ist in den Befestigungs-Abschnitt A_{B} integriert. Der Werkzeugabschnitt 14 ist als unrunde Innenkontur ausgeführt, die sich von einer dem Einführende gegenüberliegenden Stirnseite 17 entlang der Mittel-Längs-Achse 6 erstreckt. Wie bei den ersten beiden Ausführungsbeispielen ist der Werkzeugabschnitt 14 als Vertiefung in der Schraube selbst ausgeführt. Die Vertiefung erstreckt sich entlang einer Werkzeugabschnittslänge L_{AW}. Die Länge L_{AW} ist derart festgelegt, dass ein sicheres Eingreifen in den Werkzeugabschnitt 14 mit einem dafür vorgesehenen Werkzeug gewährleistet ist. Gemäß dem gezeigten Ausführungsbeispiel hat der Werkzeugabschnitt 14 eine Innen-Sechskant-Kontur. Wesentlich ist, dass die Kontur des Werkzeugabschnitts 14 eine bezogen auf die Mittel-Längs-Achse 6 orientiert unrunde Kontur aufweist. Wie bei dem dritten Ausführungsbeispiel ist das Befestigungs-Gewinde 16 ein metrisches M6-Außengewinde. Es ist auch denkbar, eine andere Gewindegröße als Befestigungs-Gewinde 16 vorzusehen. Insbesondere ist ein metrisches M8-Außengewinde denkbar.

Die Länge L_{B} des Befestigungs-Abschnitts A_{B} entlang der Mittel-Längs-Achse 6 ist größer als die Einschraub-Länge L_{E}. Die Summe der Länge L_{B} des Befestigungs-Gewindes 16 und der Einschraub-Länge L_{E} ergibt die Gesamtlänge L der Schraube 1c. Gemäß dem gezeigten Ausführungsbeispiel gilt L_{B} > 1,2 · L_{E}. Insbesondere gilt: L_{B} ≥ 1,05 · L_{E}, insbesondere L_{B} ≥ 1,1 · L_{E}, insbesondere L_{B} ≥ 1,15 · L_{E}, und insbesondere L_{B} ≥ 1,20 · L_{E}.

Die Schraube 1c weist einen Vorteil hinsichtlich einer Montage, also einer Befestigung einer Schiene an der Schraube 1c auf. Dadurch, dass eine Zugänglichkeit der Schraube 1c am Außenumfang entbehrlich ist, ist eine vereinfachte, behinderungsfreie Montage möglich. Da die Schraube ein reduziertes Einschraub-Drehmoment aufweist, ist die unrunde Innenkontur als Werkzeugabschnitt 14 ausreichend, um das Einschraub-Drehmoment zu übertragen. Eine aus dem Stand der Technik bekannte Betonschraube könnte einen innenliegenden Werkzeugabschnitt mit unrunder Innenkontur nicht aufweisen, da sonst eine ausreichende Kraftübertragung nicht möglich wäre.

Die Schraube 1c eignet sich insbesondere auch für das Befestigen von Rohrschellen, beispielsweise um Leitungsrohre an einer Betonwand und/oder an einer Betondecke zu befestigen.

## Patentansprüche

1. Selbstschneidende Schraube zum Einschrauben in ein Bohrloch (3) in Beton (2), wobei die Betonschraube (1; 1a; 1b) umfasst
a. einen zylindrischen Kern (7) mit einem Kern-Durchmesser (D_{K}),
b. ein Schneid-Gewinde (8) zum Einschrauben desselben in den Beton (2) mit einem Gewinde-Durchmesser (D_{G}),
wobei gilt: D_{G} > D_{K},
**dadurch gekennzeichnet, dass** eine Gewindesteigung (H) vorgesehen ist, wobei gilt: H ≤ 1,2 · D_{K},
eine maximale Einschraubtiefe höchstens 30 mm beträgt.

2. Schraube gemäß Anspruch 1, **dadurch gekennzeichnet, dass** gilt:
D_{G}, ≤ 1,4 · D_{K}, insbesondere D_{G} < 1,38 · D_{K}, insbesondere
D_{G} < 1,35 · D_{K}, insbesondere D_{G} < 1,32 · D_{K}, insbesondere
D_{G} < 1,3 · D_{K}, insbesondere D_{G} < 1,28 · D_{K} und insbesondere
D_{G} < 1,275 · D_{K}.

3. Schraube gemäß einem der vorstehenden Ansprüche, **gekennzeichnet durch** ein Anschneid-Element (12) des Schneid-Gewindes (8), wobei das Anschneid-Element (12) insbesondere im Bereich eines Einführendes (10) der Schraube (1; 1a; 1b) angeordnet ist.

4. Schraube gemäß einem der vorstehenden Ansprüche, **dadurch gekennzeichnet, dass** die maximale Einschraubtiefe höchstens 29 mm, insbesondere höchstens 28 mm, insbesondere höchstens 27 mm, insbesondere höchstens 26 mm und insbesondere höchstens 25 mm beträgt.

5. Schraube gemäß einem der vorstehenden Ansprüche, **gekennzeichnet durch** einen Flankenwinkel (a) des Schneid-Gewindes (8), wobei insbesondere gilt: a < 60°, insbesondere a < 58°, insbesondere a < 55°, insbesondere a < 52° und insbesondere a ≤ 50°.

6. Schraube gemäß einem der vorstehenden Ansprüche, **dadurch gekennzeichnet, dass** gilt: H ≤ 1,15 · D_{K}, insbesondere H ≤ 1,12 · D_{K} und insbesondere H ≤ 1,1 · D_{K}. insbesondere H ≤ 1,0 · D_{K}, insbesondere H ≤ 0,9 · D_{K}, insbesondere H ≤ 0,85 · D_{K} und insbesondere H ≤ 0,8 · D_{K}.

7. Schraube gemäß einem der vorstehenden Ansprüche, **gekennzeichnet durch** eine Flankenbreite (B) im Gewindegrund, wobei insbesondere gilt: B < 0,2 · D_{K}, insbesondere B < 0,18 · D_{K}, insbesondere B < 0,15 · D_{K}, insbesondere B < 0,12. D_{K} und insbesondere B ≤ 0,1 · D_{K}.

8. Schraube gemäß einem der vorstehenden Ansprüche, **gekennzeichnet durch** einen gewindefreien Schaft-Abschnitt (As), der insbesondere gegenüberliegend zu dem Einführende (10) an das Schneid-Gewinde (8) anschließt.

9. Schraube gemäß einem der vorstehenden Ansprüche, **gekennzeichnet durch** eine Befestigungs-Einheit zum Befestigen eines Gegenstands an der Schraube (1; 1a; 1b), wobei die Befestigungs-Einheit insbesondere einen einteilig angeformten Schraubenkopf (11; 11a) oder ein Befestigungs-Gewinde (16) mit korrespondierendem Befestigungs-Element aufweist.

10. Schraube gemäß einem der vorstehenden Ansprüche, **gekennzeichnet durch** einen Werkzeugabschnitt (14) mit einer senkrecht zur Mittel-Längs-Achse (6) orientierten Querschnittsfläche, die eine bezogen auf die Mittel-Längs-Achse (6) unrunde Kontur aufweist.

11. Schraube gemäß einem der vorstehenden Ansprüche, **dadurch gekennzeichnet, dass** ein Drehmoment zum Einschrauben der Schraube in das Bohrloch höchstens 14 Nm, insbesondere 12 Nm, insbesondere 10 Nm, insbesondere 9 Nm, insbesondere 8 Nm und insbesondere 7,5 Nm beträgt, insbesondere höchstens 7 Nm, insbesondere höchstens 6,5 Nm und insbesondere höchstens 6 Nm.

12. Anordnung umfassend
a. ein in einem Werkstoff (2) angeordnetes Bohrloch (3) mit einem Bohrloch-Nenndurchmesser (D_{B}) und
b. eine selbstschneidende Schraube (1; 1a; 1b) gemäß einem der vorstehenden Ansprüche,
wobei gilt: D_{G} > D_{B}.

13. Anordnung gemäß Anspruch 12, **gekennzeichnet durch** eine Bohrloch-Tiefe (T_{B}), die derart festgelegt ist, dass das Bohrloch vor einer in dem Werkstoff (2) eingebetteten Armierungsschicht (4) endet, wobei die Bohrloch-Tiefe (T_{B}) insbesondere kleiner ist als 30 mm.

14. Verfahren zum Einschrauben einer selbstschneidenden Schraube (1; 1a; 1b) gemäß einem der Ansprüche 1 bis 11 in ein Bohrloch (3) in einem Werkstoff (2).

15. Verfahren gemäß Anspruch 14, **dadurch gekennzeichnet, dass** das zum Einschrauben erforderliche Drehmoment höchstens 14 Nm beträgt, insbesondere höchstens 12 Nm, insbesondere höchstens 10 Nm, insbesondere höchstens 9 Nm, insbesondere höchstens 8 Nm und insbesondere höchstens 7,5 Nm, insbesondere höchstens 7 Nm, insbesondere höchstens 6,5 Nm und insbesondere höchstens 6 Nm.

## Claims

1. Self-tapping screw for screwing into a drilled hole (3) in concrete (2), wherein the concrete screw (1; 1a; 1b) comprises
a. a cylindrical core (7) having a core diameter (D_{K}),
b. a cutting thread (8) for screwing the latter into the concrete (2), having a thread diameter (D_{G}),
where the following holds: D_{G} > D_{K},
**characterized in that** a thread pitch (H) is provided, where the following holds: H ≤ 1.2 · D_{K},
a maximum screwing-in depth is at most 30 mm.

2. Screw according to Claim 1, **characterized in that** the following holds:
D_{G} ≤ 1.4 · D_{K}, in particular D_{G} < 1.38 · D_{K}, in particular
D_{G} < 1.35 · D_{K}, in particular D_{G} < 1.32 · D_{K}, in particular
D_{G} < 1.3 · D_{K}, in particular D_{G} < 1.28 · D_{K} and in particular
D_{G} < 1.275 · D_{K}.

3. Screw according to either of the preceding claims, **characterized by** an incipient-cutting element (12) of the cutting thread (8), wherein the incipient-cutting element (12) is arranged in particular in the region of an insertion end (10) of the screw (1; 1a; 1b).

4. Screw according to one of the preceding claims, **characterized in that** the maximum screwing-in depth is at most 29 mm, in particular at most 28 mm, in particular at most 27 mm, in particular at most 26 mm and in particular at most 25 mm.

5. Screw according to one of the preceding claims, **characterized by** a flank angle (a) of the cutting thread (8), where in particular the following holds: a < 60°, in particular a < 58°, in particular a < 55°, in particular a < 52° and in particular a ≤ 50°.

6. Screw according to one of the preceding claims, **characterized in that** the following holds: H ≤ 1.15 · D_{K}, in particular H ≤ 1.12 . D_{K}, and in particular H ≤ 1.1 · D_{K}, in particular H ≤ 1.0 · D_{K}, in particular H ≤ 0.9 · D_{K}, in particular H ≤ 0.85 · D_{K} and in particular H ≤ 0.8 · D_{K}.

7. Screw according to one of the preceding claims, **characterized by** a flank width (B) in the thread root, where in particular the following holds: B < 0.2 · D_{K}, in particular B < 0.18 · D_{K}, in particular B < 0.15 · D_{K}, in particular B < 0.12 · D_{K} and in particular B ≤ 0.1 · D_{K}.

8. Screw according to one of the preceding claims, **characterized by** a thread-free shank portion (As) which in particular adjoins the cutting thread (8) opposite to the insertion end (10).

9. Screw according to one of the preceding claims, **characterized by** a fastening unit for fastening an object to the screw (1; 1a; 1b), wherein the fastening unit has in particular an integrally formed screw head (11; 11a) or a fastening thread (16) with a corresponding fastening element.

10. Screw according to one of the preceding claims, **characterized by** a tool portion (14) having a cross-sectional surface which is oriented perpendicularly to the centre longitudinal axis (6) and which has a non-round contour with respect to the centre longitudinal axis (6).

11. Screw according to one of the preceding claims, **characterized in that** a torque for screwing the screw into the drilled hole is at most 14 Nm, in particular 12 Nm, in particular 10 Nm, in particular 9 Nm, in particular 8 Nm and in particular 7.5 Nm, in particular at most 7 Nm, in particular at most 6.5 Nm and in particular at most 6 Nm.

12. Arrangement comprising
a. a drilled hole (3) arranged in a material (2) and having a drilled hole nominal diameter (D_{B}), and
b. a self-tapping screw (1; 1a; 1b) according to one of the preceding claims,
where the following holds: D_{G} > D_{B}.

13. Arrangement according to Claim 12, **characterized by** a drilled hole depth (T_{B}) which is defined in such a way that the drilled hole ends ahead of a reinforcing layer (4) embedded in the material (2), wherein the drilled hole depth (T_{B}) is in particular less than 30 mm.

14. Method for screwing a self-tapping screw (1; 1a; 1b) according to one of Claims 1 to 11 into a drilled hole (3) in a material (2).

15. Method according to Claim 14, **characterized in that** the torque required for screwing in is at most 14 Nm, in particular at most 12 Nm, in particular at most 10 Nm, in particular at most 9 Nm, in particular at most 8 Nm and in particular at most 7.5 Nm, in particular at most 7 Nm, in particular at most 6.5 Nm and in particular at most 6 Nm.

## Revendications

1. Vis auto-taraudeuse pour le vissage dans un alésage (3) dans du béton (2), dans laquelle la vis pour béton (1 ; 1a ; 1b) comporte
a. un corps (7) cylindrique avec un diamètre de corps (D_{K}),
b. un filet de coupe (8) pour le vissage de celui-ci dans le béton (2) avec un diamètre de filet (D_{G}),
dans laquelle il vaut : D_{G} > D_{K}, **caractérisée en ce qu'**un pas de filet (H) est prévu, dans laquelle il vaut : H ≤ 1,2 · D_{K},
une profondeur de vissage maximale s'élève au maximum à 30 mm.

2. Vis selon la revendication 1, **caractérisée en ce qu'**il vaut :
D_{G} ≤ 1,4 · D_{K}, en particulier D_{G} < 1,38 · D_{K}, en particulier
D_{G} < 1,35 · D_{K}, en particulier D_{G} < 1,32 · D_{K}, en particulier
D_{G} < 1,3 · D_{K}, en particulier D_{G} < 1,28 · D_{K} et en particulier
D_{G} < 1,275 · D_{K}.

3. Vis selon l'une des revendications précédentes, **caractérisée par** un élément de coupe (12) du filet de coupe (8), dans laquelle l'élément de coupe (12) est agencé en particulier dans la zone d'une extrémité d'introduction (10) de la vis (1 ; 1a; 1b).

4. Vis selon l'une des revendications précédentes, **caractérisée en ce que** la profondeur de vissage maximale s'élève au maximum à 29 mm, en particulier au maximum à 28 mm, en particulier au maximum à 27 mm, en particulier au maximum à 26 mm et en particulier au maximum à 25 mm.

5. Vis selon l'une des revendications précédentes, **caractérisée par** un angle de flanc (a) du filet de coupe (8), dans laquelle en particulier il vaut : a < 60°, en particulier a < 58°, en particulier a < 55°, en particulier a < 52° et en particulier a ≤ 50°.

6. Vis selon l'une des revendications précédentes, **caractérisée qu'**il vaut : H ≤ 1,15 · D_{K}, en particulier H ≤ 1,12 · D_{K} et en particulier H ≤ 1,1 · D_{K}, en particulier H ≤ 1,0 · D_{K}, en particulier H ≤ 0,9 · D_{K}, en particulier H ≤ 0,85 · D_{K} et en particulier H ≤ 0,8 · D_{K}.

7. Vis selon l'une des revendications précédentes, **caractérisée par** une largeur de flanc (B) dans le fond de filet, dans laquelle en particulier il vaut : B < 0,2 · D_{K}, en particulier B < 0,18 · D_{K}, en particulier B < 0,15 · D_{K}, en particulier B < 0,12 · D_{K} et en particulier B ≤ 0,1 · D_{K}.

8. Vis selon l'une des revendications précédentes, **caractérisée par** une section de tige sans filet (As) qui se raccorde en particulier à l'opposé de l'extrémité d'introduction (10) au filet de coupe (8).

9. Vis selon l'une des revendications précédentes, **caractérisée par** une unité de fixation pour la fixation d'un objet à la vis (1 ; 1a; 1b), dans laquelle l'unité de fixation présente en particulier une tête de vis (11 ; 11a) formée d'un seul tenant ou un filet de fixation (16) avec un élément de fixation correspondant.

10. Vis selon l'une des revendications précédentes, **caractérisée par** une section d'outil (14) avec une superficie de section orientée perpendiculairement à l'axe médian longitudinal (6) qui présente un contour non rond par rapport à l'axe médian longitudinal (6).

11. Vis selon l'une des revendications précédentes, **caractérisée en ce qu'**un couple pour le vissage de la vis dans l'alésage s'élève au maximum à 14 Nm, en particulier à 12 Nm, en particulier à 10 Nm, en particulier à 9 Nm, en particulier à 8 Nm et en particulier à 7,5 Nm, en particulier au maximum à 7 Nm, en particulier au maximum à 6,5 Nm et en particulier au maximum à 6 Nm.

12. Agencement comprenant
a. un alésage (3) agencé dans un matériau (2) avec un diamètre nominal d'alésage (D_{B}) et
b. une vis auto-taraudeuse (1 ; 1a ; 1b) selon l'une des revendications précédentes,
dans lequel il vaut : D_{G} > D_{B}.

13. Agencement selon la revendication 12, **caractérisé par** une profondeur d'alésage (T_{B}) qui est fixée de telle manière que l'alésage se termine avant une couche d'armure (4) intégrée dans le matériau (2), dans lequel la profondeur d'alésage (T_{B}) est en particulier inférieure à 30 mm.

14. Procédé de vissage d'une vis auto-taraudeuse (1 ; 1a ; 1b) selon l'une des revendications 1 à 11 dans un alésage (3) dans un matériau (2).

15. Procédé selon la revendication 14, **caractérisé en ce que** le couple nécessaire au vissage s'élève au maximum à 14 Nm, en particulier au maximum à 12 Nm, en particulier au maximum à 10 Nm, en particulier au maximum à 9 Nm, en particulier au maximum à 8 Nm et en particulier au maximum à 7,5 Nm, en particulier au maximum à 7 Nm, en particulier au maximum à 6,5 Nm et en particulier au maximum à 6 Nm.
